# FASCICULE DE BREVET EUROPEEN

(11) **EP 3 195 190 B1**
(45) Date de publication et mention de la délivrance du brevet: **02.09.2020**
(21) Numéro de dépôt: 15752933.0
(22) Date de dépôt: 22.07.2015
(51) Int. Cl.: G06K 9/00, G06K 9/62

(54) **DÉTECTION DE FEUX TRICOLORES À PARTIR D'IMAGES**
ERKENNUNG VON VERKEHRSAMPELN AUF BILDERN
DETECTING TRAFFIC LIGHTS FROM IMAGES

(30) Priorité: 23.07.2014 FR 1401678
(43) Date de publication de la demande: 26.07.2017
(73) Titulaire: Valeo Schalter und Sensoren GmbH, 74321 Bietigheim-Bissingen (DE)
(72) Inventeur: PICRON, Vanessa, F-94046 Créteil CEDEX (FR); BRADAI, Benazouz, F-94046 Créteil CEDEX (FR); TREHARD, Guillaume, F-94046 Créteil CEDEX (FR)
(74) Mandataire: Claassen, Maarten Pieter
(86) Numéro de dépôt international: PCT/EP2015/066807
(87) Numéro de publication internationale: WO 2016/012524

(56) Documents cités:
- DE-A1-102009 040 252
- DE-A1-102012 108 862
- US-A1- 2010 033 571
- US-A1- 2013 253 754
- FRANKE UWE ET AL: "Making Bertha See", 2013 IEEE INTERNATIONAL CONFERENCE ON COMPUTER VISION WORKSHOPS, IEEE, 2 décembre 2013 (2013-12-02), pages 214-221, XP032575759, DOI: 10.1109/ICCVW.2013.36
- LINDNER F ET AL: "Robust recognition of traffic signals", INTELLIGENT VEHICLES SYMPOSIUM, 2004 IEEE PARMA, ITALY JUNE 14-17, 2004, PISCATAWAY, NJ, USA,IEEE, 14 juin 2004 (2004-06-14), pages 49-53, XP010727441, DOI: 10.1109/IVS.2004.1336354 ISBN: 978-0-7803-8310-4

## Description

La présente invention concerne de manière générale le domaine des véhicules automobiles, et plus précisément un procédé et un système embarqué permettant de détecter, à partir du traitement d'images captées par au moins une caméra, la présence et l'état des feux tricolores rencontrés sur la route.

Il est connu d'équiper certains véhicules automobiles avec des systèmes d'aide à la conduite utilisant différents capteurs pour détecter notamment les lignes de marquage routier, les obstacles, les autres véhicules, ou encore les panneaux de signalisation, et en particulier les feux tricolores.

La détection et le suivi de l'état d'un feu tricolore sont particulièrement importants pour les véhicules dits autonomes pour que le système puisse anticiper des phases de freinage à l'approche d'un carrefour lorsqu'un feu tricolore est sur le point de passer au rouge, et permettre un redémarrage du véhicule lorsque ce même feu tricolore repasse à nouveau au vert.

Certains systèmes embarqués développés par différents constructeurs automobiles se montrent de plus en plus complets et capables de communiquer avec les autres véhicules présents sur la route mais aussi avec les infrastructures publiques, comme les feux tricolores. Ces systèmes, connus sous la dénomination anglo-saxonne « Vehicle-to-X » ou « Car-to-X » (la lettre X représentant soit un autre véhicule, soit une infrastructure publique), utilisent un réseau de communication sans fil (par exemple GSM, ou W-LAN) pour échanger des informations avec les infrastructures routières (feux, passages à niveau, travaux, etc.), et dialoguer en continu et en temps réel via ce réseau sans fil de façon à permettre au conducteur d'être averti de dangers avant même de les apercevoir, voire à permettre un véritable pilotage automatique avec des stratégies de décélération, d'accélération, d'arrêt et de redémarrage ne nécessitant plus l'intervention du conducteur. Un tel système est par exemple décrit dans le document WO 2013/186379.

Ces systèmes sont néanmoins très coûteux, et ne sont pas encore opérationnels puisqu'il est nécessaire d'équiper auparavant toutes les infrastructures publiques de moyens de communication.

D'autres systèmes déjà en série sur certains véhicules utilisent les images captées par une caméra frontale, de préférence localisée à un endroit du véhicule qui correspond le mieux à ce que le conducteur voit, par exemple centrée au niveau du pare-brise à l'intérieur de l'habitacle. Différents traitements sur les images captées permettent ainsi de détecter des panneaux de signalisation, par exemple de limitation ou de fin de limitation de vitesse, des marquages au sol, ou la présence d'autres véhicules roulant devant ou arrivant en direction inverse. Ces traitements sont ensuite utilisés pour différentes applications d'assistance à la conduite, telles que l'alerte en cas de franchissement de lignes, le basculement automatique des feux de route et des feux de croisement, le freinage d'urgence ou la régulation de la vitesse de conduite. Il est également connu, par exemple du document WO 2011/026584, d'utiliser cette caméra frontale pour détecter l'état d'un feu tricolore.

D'autres systèmes sont également connus tels que:
- FRANKE UWE ET AL: "Making Bertha See",2013 IEEE INTERNATIONAL CONFERENCE ON COMPUTER VISION WORKSHOPS, IEEE, 2 décembre 2013 (2013-12-02), pages 214-221, DOI: 10.1109/ICCVW.2013.36,
- LINDNER F ET AL: "Robust recognition of traffic signals", INTELLIGENT VEHICLES SYMPOSIUM, 2004 IEEE PARMA, ITALY JUNE 14-17, 2004, PISCATAWAY, NJ, USA,IEEE, 14 juin 2004 (2004-06-14), pages 49-53, DOI: 10.1109/IVS.2004.1336354ISBN: 978-0-7803-8310-4.

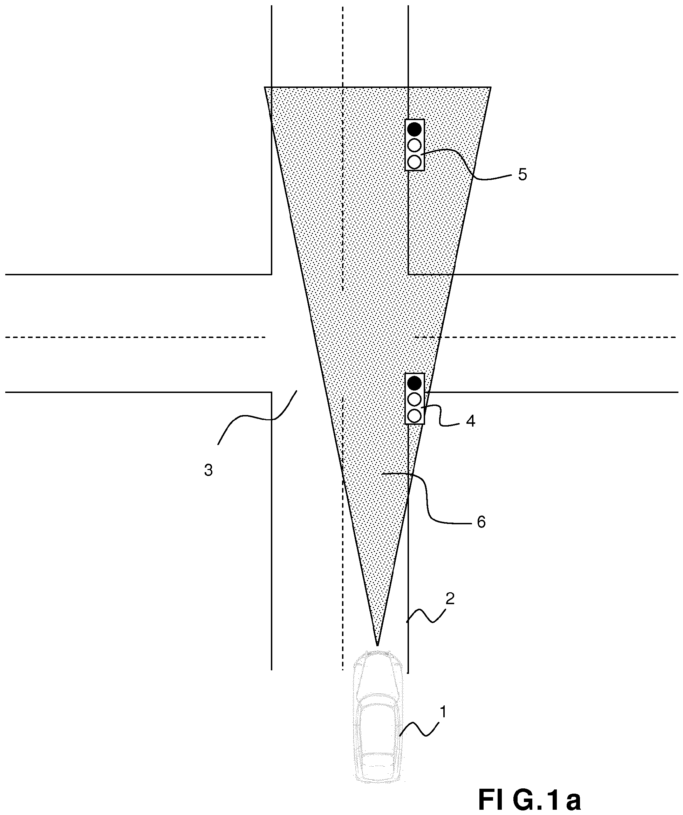

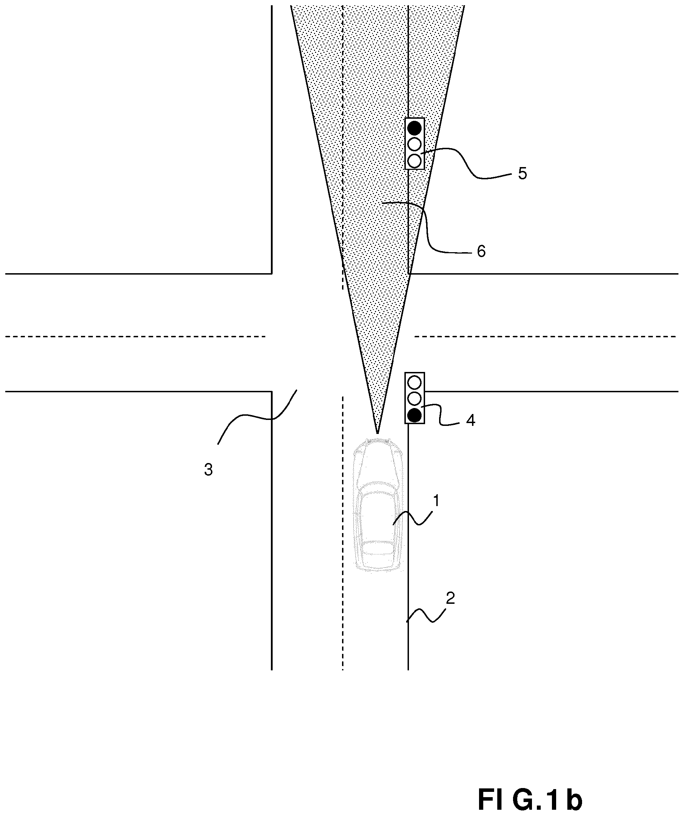

La figure la illustre schématiquement un exemple de scène routière pour un véhicule automobile 1 se déplaçant sur une route 2 et arrivant à une intersection 3. Le véhicule 1 est muni d'une caméra frontale (non représentée). Pour garantir que le système pourra détecter suffisamment à l'avance la présence des feux tricolores, en particulier du feu 4 situé à l'intersection, et du feu 5 situé après l'intersection, la caméra utilisée présente un cône de vision 6 avec un angle d'ouverture horizontale de l'ordre de 40° à 50°. Une telle caméra est ainsi capable de détecter les feux situés à environ 100 mètres au-devant du véhicule 1. Dans l'exemple de la figure la, les deux feux tricolores 4 et 5 sont à l'état « Rouge », comme représenté par le premier cercle noir des trois cercles représentatifs des trois états rouge/orange/vert d'un feu tricolore classique. Par un traitement adapté des images captées dans le cône de vision 6, le système embarqué sur le véhicule pourra donc détecter non seulement la présence du feu tricolore 4, mais également son état, et commander ici une décélération progressive et donc confortable pour les occupants du véhicule, jusqu'à l'arrêt total du véhicule. Le véhicule 1 se retrouve alors dans la situation représentée schématiquement sur la figure 1b. On constate alors que le feu tricolore 4 n'est plus dans le cône de vision 6 de la caméra, de sorte que le véhicule n'est pas renseigné sur un passage au « vert » du feu tricolore. En d'autres termes, dans cette situation, il est impossible pour le système d'aide à la conduite ou le véhicule autonome de savoir à quel moment il doit commander le redémarrage du véhicule.

La présente invention a pour but de pallier cette limitation en proposant une solution qui soit toujours dans le domaine du traitement d'images captées par caméras embarquées.

Ce but est atteint selon l'invention qui a pour objet un procédé de détection selon la revendication indépendante 1.

On garantit ainsi de pouvoir prendre une décision appropriée suffisamment tôt en fonction de l'état d'un feu tricolore, en particulier une décision anticipée de décélération puis d'arrêt à la hauteur du feu tricolore si le feu est passé dans un état rouge, suivie d'une décision de redémarrage lorsque le feu tricolore passe à nouveau au vert.

Selon d'autres caractéristiques additionnelles possibles :
- la deuxième étape peut n'être déclenchée que lorsqu'un premier feu tricolore détecté et suivi à partir d'images issues de la caméra frontale est sur le point de quitter le champ de vision de la caméra frontale ;
- la deuxième étape peut n'être déclenchée que lorsqu'un premier feu tricolore détecté et suivi à partir d'images issues de la caméra frontale est en outre dans un état rouge. On évite ainsi avantageusement un traitement inutile si le feu détecté par la caméra frontale était vert, et qu'il n'est pas alors nécessaire de s'arrêter à sa hauteur.

La présente invention a également pour objet un système de détection selon la revendication indépendante 4.

La caméra frontale est de préférence une caméra d'ouverture horizontale de l'ordre de 40°. Elle peut être positionnée notamment sensiblement centrée horizontalement au niveau du pare-brise à l'intérieur de l'habitacle.

Les caméras de vision sont des caméras grand angle (typiquement de l'ordre de 180°, voire 190°) situées traditionnellement dans le pare-chocs avant, sur les rétroviseurs externes du véhicule et sur le pare-chocs arrière. Les caméras de vision qui seront utilisées dans le cadre de l'invention seront donc la caméra du pare-chocs avant et/ou l'une des caméras de rétroviseurs.

L'invention et ses différents avantages seront mieux compris au vu de la description suivante, faite en référence aux figures annexées, dans lesquelles :
- les figures la et 1b, déjà décrites, illustrent schématiquement une situation particulière d'une scène routière montrant les limitations des systèmes existant basés sur l'utilisation d'une caméra frontale ;
- la figure 2 représente schématiquement la même situation routière que la figure 1b, dans le cas d'un véhicule équipé d'un système de détection conforme à la présente invention;
- la figure 3 donne un synoptique simplifié d'un exemple de procédé mis en œuvre par un système selon l'invention pour la détection des feux tricolores.

La présente invention repose sur le fait que les véhicules automobiles autonomes ou quasi-autonomes sont généralement prévus pour être équipés d'autres capteurs que la caméra frontale, ces capteurs étant dédiés à d'autres fonctionnalités. Parmi ces autres fonctionnalités, on connaît en particulier des systèmes dits « vision périphérique » qui permettent d'assister le conducteur lors de manœuvres à basse vitesse, typiquement pour l'aide au parking ou une manœuvre en marche arrière. Pour ce faire, un écran situé au niveau du tableau de bord dans l'habitacle du véhicule est utilisé pour afficher différentes vues, dont une vue d'ensemble plongeante périphérique (« bird's eye view » en terminologie anglo-saxonne). Cela est rendu possible grâce à l'utilisation de plusieurs caméras embarquées sur le véhicule, typiquement une caméra au niveau du pare-chocs avant, une caméra au niveau de chaque rétroviseur extérieur droite et gauche, et une caméra de recul au niveau du pare-chocs arrière. Chacune de ces caméras de vision sont des caméras grand angle, avec typiquement un cône de vision de l'ordre de 180°, voire 190°. Les images captées par ces différentes caméras sont traitées par le système de vision périphérique pour recréer sur 360° une vision complète de l'entourage du véhicule.

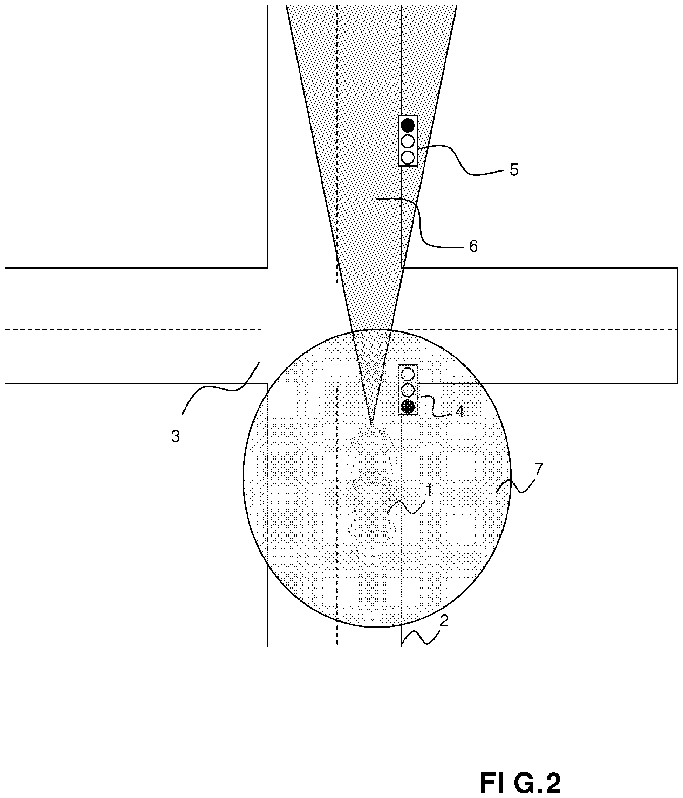

La figure 2 illustre le cas d'un véhicule automobile 1 muni de la caméra frontale décrite ci-avant, de préférence une caméra couleur, et des caméras de vision permettant d'offrir la vision périphérique, dans la même situation de scène routière que celle décrite dans les figures la et 1b. Pour ne pas surcharger inutilement la figure, les caméras de vision n'ont pas été représentées, ni les cônes de vision associés à chacune de ces caméras. Seule la zone de vision périphérique 7 recréée à partir des images captées par les différentes caméras de vision a été représentée schématiquement sur la figure 2. On note que dans ce cas, le feu de signalisation 4 est présent dans cette zone de vision périphérique 7.

Conformément à l'invention, on prévoit de rajouter dans le module de traitement d'images associé au système de vision périphérique un traitement d'images similaire à celui utilisé par le module de traitement d'images associé au système de détection de feux tricolores pour permettre la détection des feux tricolores et de leur changement d'état par les deux systèmes, selon la distance à laquelle le véhicule 1 se trouve par rapport à ces feux.

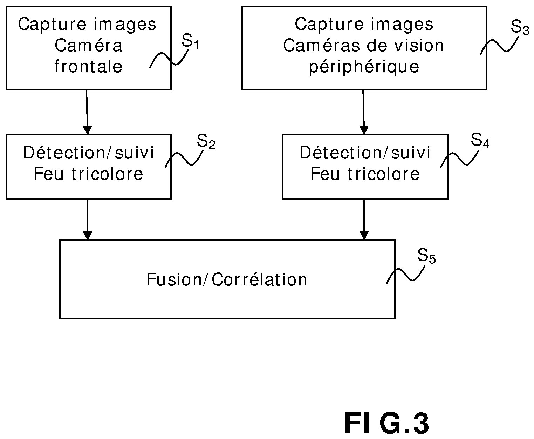

La figure 3 illustre différentes étapes mises en œuvres dans un procédé de détection des feux tricolores conforme à l'invention :
En particulier, la caméra frontale capture les images de la scène routière située à l'avant du véhicule 1, lors d'une étape S₁. Ces images sont fournies à un module de traitement d'images du système de détection des feux tricolores. Différents traitements connus peuvent mis en œuvre par ce module. Par exemple, un traitement peut consister à détecter des cercles dans l'image capturée, puis à comparer à des modèles connus. Une fois un feu tricolore détecté, on fait un suivi de ce feu, par exemple en utilisant des filtrages connus de type filtrage de Kalman (étape S₂). Quel que soit le traitement utilisé, chaque feu tricolore présent dans le cône de vision 5, ainsi que son état (rouge/orange/vert) est détecté et sa distance par rapport au véhicule 1 est estimée de manière à contrôler si nécessaire les phases de décélération voire d'arrêt du véhicule. Par ailleurs, les caméras de vision périphérique capturent également différentes images dans leur champ de vision respectif (étape S₃). Ces images sont également fournies à un module de traitement d'images dédié à la fonctionnalité de vision périphérique, pour l'affichage de vues sur un écran faisant face au conducteur. Le module de traitement est apte en outre, lors d'une étape S₄, à effectuer un traitement d'images similaire à celui réalisé lors de l'étape S₂, pour la détection et le suivi des feux tricolores et de leur état, complété de préférence par des corrections de distorsions. Les résultats des traitements issus de ces deux étapes S₂ et S₄ sont ensuite fusionnés et corrélés en temps réel (étape S₅), de façon à garantir qu'un même feu tricolore et son état puissent être détectés puis suivis, d'abord à une distance suffisamment importante, de l'ordre de 100 mètres, par le système lié à la caméra frontale, puis par certaines des caméras de vision associées au système de vision périphérique, en particulier la caméra de vision avant et/ou l'une ou l'autre des caméras latérales situées dans les rétroviseurs. Différentes stratégies peuvent alors être mises en œuvre : On peut en particulier prévoir que les caméras de vision prennent le relais dans le cadre du traitement pour la détection des feux uniquement lorsqu'un feu tricolore détecté et suivi à partir d'images issues de la caméra frontale est sur le point de quitter le champ de vision de la caméra frontale. Il est en effet possible, connaissant la vitesse de déplacement du véhicule, la distance estimée à laquelle se situe un feu tricolore détecté par la caméra frontale, et les paramètres de calibration de la caméra frontales, d'estimer à partir de quand cette caméra frontale ne sera plus apte à voir ce feu. En variante, on peut prévoir que les caméras de vision prennent le relais pour la détection et le suivi d'un feu tricolore uniquement si ce dernier est passé au rouge alors qu'il était encore dans le champ de vision de la caméra frontale. En effet, dans ce cas, la détection du passage à l'état « Rouge » impliquera nécessairement une phase de décélération fonction de la distance estimée du feu pour permettre un arrêt à hauteur de ce feu, et les caméras de vision doivent être alors opérationnelles pour permettre de détecter un nouveau passage au vert de ce même feu, et par suite, un redémarrage du véhicule. Bien entendu, les caméras permettent également de détecter la présence d'un autre véhicule entre le véhicule et le feu, et d'ajuster en conséquence la distance d'arrêt et le redémarrage.

Quelle que soit la stratégie adoptée, le suivi d'un même feu tricolore par l'un et/ou l'autre des systèmes est rendu possible par la connaissance des paramètres intrinsèques et extrinsèques des différentes caméras, comme leur position, leur orientation, leur angle d'ouverture, qui permettent de passer du repère image de chaque caméra au repère du monde réel, et par la connaissance des paramètres odométriques (vitesse de déplacement, accélération) du véhicule connus par ailleurs.

## Revendications

1. Procédé de détection de la présence et de l'état parmi les trois états rouge/orange/vert d'un feu de signalisation sur une scène routière à partir du traitement d'images capturées par au moins une caméra embarquée sur un véhicule automobile, **caractérisé en ce qu'**un même feu de signalisation est détecté et suivi à partir d'images capturées par une première caméra frontale et à partir d'images capturées par au moins une caméra de vision parmi une pluralité de caméras de vision d'un système de vision périphérique embarqué,
et **en ce qu'**il comporte successivement:
- une première étape (S₂) de détection et de suivi de l'état parmi les trois états rouge/orange/vert d'un premier feu de signalisation à partir d'images capturées uniquement à partir de ladite première caméra frontale, et d'estimation de la distance du véhicule automobile par rapport au premier feu ;
- une deuxième étape (S₄) de détection et de suivi de l'état parmi les trois états rouge/orange/vert d'un deuxième feu de signalisation à partir d'images capturées à partir de ladite au moins une caméra de vision, et d'estimation de la distance du véhicule automobile par rapport au deuxième feu ;
- une étape (S₅) de corrélation des détections du premier feu et du deuxième feu et des distances estimées pour déduire que le premier feu et le deuxième feu constituent un seul et même feu.

2. Procédé de détection selon la revendication 1, **caractérisé en ce que** la deuxième étape n'est déclenchée que lorsque le premier feu détecté et suivi à partir d'images issues de la caméra frontale est sur le point de quitter le champ de vision de la caméra frontale.

3. Procédé de détection selon la revendication 2, **caractérisé en ce que** la deuxième étape n'est déclenchée que lorsque le premier feu détecté et traqué à partir d'images issues de la caméra frontale est en outre dans un état rouge.

4. Système pour la mise en œuvre du procédé selon l'une quelconque des revendications 1 à 3, comportant :
- une première caméra frontale embarquée sur un véhicule automobile ;
- un premier module de traitement des images capturées par ladite première caméra frontale, apte à détecter la présence et l'état parmi les trois états rouge/orange/vert d'un feu de signalisation, et à estimer la distance du véhicule automobile par rapport à ce feu ;
- un système de vision périphérique comprenant une pluralité de caméras de vision embarquées sur ledit véhicule et un écran d'affichage apte à recréer une image périphérique de l'environnement du véhicule automobile à partir des images capturées par ladite pluralité de caméras ; et
- un deuxième module de traitement des images capturées par au moins une des caméras de vision parmi ladite pluralité de caméras de vision, le deuxième module de traitement étant apte à détecter la présence et l'état parmi les trois états rouge/orange/vert du même feu que celui détecté par le premier module de traitement, et à estimer la distance du véhicule automobile par rapport à ce même feu.

5. Système selon la revendication 4, **caractérisé en ce que** la caméra frontale est une caméra d'ouverture horizontale de l'ordre de 40° à 50°.

6. Système selon l'une quelconque des revendications 4 ou 5, **caractérisé en ce que** la caméra frontale est positionnée sensiblement centrée horizontalement au niveau du pare-brise à l'intérieur de l'habitacle.

7. Système selon l'une quelconque des revendications 4 à 6, **caractérisé en ce que** ladite au moins une des caméras de vision est une caméra grand angle située à l'avant du véhicule ou sur l'un des côtés du véhicule.

8. Système selon la revendication 7, **caractérisé en ce que** la caméra grand angle est dans le pare-chocs avant du véhicule.

9. Système selon la revendication 7, **caractérisé en ce que** la caméra grand angle est sur un rétroviseur extérieur du véhicule.

10. Un programme d'ordinateur, comprenant des moyens de code de programme pour mettre en œuvre le procédé de l'une quelconque des revendications 1 à 3, lorsque ledit programme fonctionne sur un ordinateur.

11. Support lisible par ordinateur comprenant des instructions qui, lorsqu'elles sont exécutées par un ordinateur, conduisent celui-ci à mettre en œuvre la méthode selon l'une quelconque des revendications 1 à 3.

## Patentansprüche

1. Verfahren zum Erkennen des Vorhandenseins und des Zustands der drei Zustände Rot/Orange/Grün einer Verkehrsampel in einer Straßenszene mit Hilfe der Verarbeitung von Bildern, die durch mindestens eine an einem Kraftfahrzeug installierte Kamera erfasst werden, **dadurch gekennzeichnet, dass** ein und dieselbe Verkehrsampel mit Hilfe von Bildern, die durch eine erste Frontkamera erfasst werden, und mit Hilfe von Bildern, die durch mindestens eine Sichtkamera einer Vielzahl von Sichtkameras eines installierten Rundumsichtsystems erfasst werden, erkannt und überwacht wird,
und dass es nacheinander Folgendes umfasst:
- einen ersten Schritt (S₂) des Erkennens und des Überwachens des Zustands der drei Zustände Rot/Orange/Grün einer ersten Verkehrsampel mit Hilfe von Bildern, die ausschließlich mit Hilfe der ersten Frontkamera erfasst werden, und des Berechnens des Abstands des Kraftfahrzeugs zu der ersten Ampel;
- einen zweiten Schritt (S₄) des Erkennens und des Überwachens des Zustands der drei Zustände Rot/Orange/Grün einer zweiten Verkehrsampel mit Hilfe von Bildern, die mit Hilfe der mindestens einen Sichtkamera erfasst werden, und des Berechnens des Abstands des Kraftfahrzeugs zu der zweiten Ampel;
- einen Schritt (S₅) des Korrelierens der Erkennungen der ersten Ampel und der zweiten Ampel und der berechneten Abstände, um daraus zu schließen, ob die erste Ampel und die zweite Ampel ein und dieselbe Ampel darstellen.

2. Erkennungsverfahren nach Anspruch 1, **dadurch gekennzeichnet, dass** der zweite Schritt nur ausgelöst wird, wenn die erste, mit Hilfe von aus der Frontkamera stammenden Bildern erkannte und überwachte Ampel dabei ist, das Sichtfeld der Frontkamera zu verlassen.

3. Erkennungsverfahren nach Anspruch 2, **dadurch gekennzeichnet, dass** der zweite Schritt nur ausgelöst wird, wenn sich die erste, mit Hilfe von aus der Frontkamera stammenden Bildern erkannte und nachverfolgte Ampel ferner in einem roten Zustand befindet.

4. System zum Implementieren des Verfahrens nach einem der Ansprüche 1 bis 3, das Folgendes umfasst:
- eine erste, an einem Kraftfahrzeug installierte Frontkamera;
- ein erstes Modul zur Verarbeitung der durch die erste Frontkamera erfassten Bilder, das fähig ist, das Vorhandensein und den Zustand der drei Zustände Rot/Orange/Grün einer Verkehrsampel zu erkennen und den Abstand des Kraftfahrzeugs zu dieser Ampel zu berechnen;
- ein Rundumsichtsystem, das eine Vielzahl von an dem Fahrzeug installierten Sichtkameras und einen Anzeigebildschirm, der fähig ist, mit Hilfe der durch die Vielzahl von Kameras erfassten Bilder ein Rundumbild der Umgebung des Kraftfahrzeugs zu rekonstruieren, beinhaltet; und
- ein zweites Modul zur Verarbeitung der durch mindestens eine der Sichtkameras der Vielzahl von Sichtkameras erfassten Bilder, wobei das zweite Verarbeitungsmodul fähig ist, das Vorhandensein und den Zustand der drei Zustände Rot/Orange/Grün derselben Ampel wie die, die durch das erste Verarbeitungsmodul erkannt wurde, zu erkennen und den Abstand des Kraftfahrzeugs zu eben dieser Ampel zu berechnen.

5. System nach Anspruch 4, **dadurch gekennzeichnet, dass** die Frontkamera eine Kamera mit einer horizontalen Öffnung von etwa 40° bis 50° ist.

6. System nach einem der Ansprüche 4 oder 5, **dadurch gekennzeichnet, dass** die Frontkamera im Wesentlichen horizontal zentriert im Bereich der Windschutzscheibe im Fahrzeuginnenraum positioniert ist.

7. System nach einem der Ansprüche 4 bis 6, **dadurch gekennzeichnet, dass** die mindestens eine der Sichtkameras eine Weitwinkelkamera ist, die sich an der Vorderseite des Fahrzeugs oder an einer der Seiten des Fahrzeugs befindet.

8. System nach Anspruch 7, **dadurch gekennzeichnet, dass** sich die Weitwinkelkamera in dem vorderen Stoßfänger des Fahrzeugs befindet.

9. System nach Anspruch 7, **dadurch gekennzeichnet, dass** sich die Weitwinkelkamera an einem Außenspiegel des Fahrzeugs befindet.

10. Computerprogramm, das Programmcodemittel zum Implementieren des Verfahrens nach einem der Ansprüche 1 bis 3 beinhaltet, wenn das Programm auf einem Computer abläuft.

11. Computerlesbares Medium, das Anweisungen beinhaltet, die, wenn sie von einem Computer ausgeführt werden, diesen dazu veranlassen, die Verfahrensweise nach einem der Ansprüche 1 bis 3 zu implementieren.

## Claims

1. Method for detecting the presence and the state from among the three red/orange/green states of a traffic light on a road scene from the processing of images captured by at least one camera embedded on a motor vehicle, **characterized in that** one and the same traffic light is detected and tracked from images captured by a first front-end camera and from images captured by at least one vision camera from among a plurality of vision cameras of an embedded peripheral vision system,
and **in that** it comprises, in succession:
- a first step (S₂) of detection and of tracking of the state from among the three red/orange/green states of a first traffic light from images captured only from said first front-end camera, and of estimation of the distance from the motor vehicle to the first light;
- a second step (S₄) of detection and of tracking of the state from among the three red/orange/green states of a second traffic light from images captured from said at least one vision camera, and of estimation of the distance from the motor vehicle to the second light;
- a step (S₅) of correlation of the detections of the first light and of the second light and of the estimated distances to deduce that the first light and the second light constitute one and the same light.

2. Detection method according to Claim 1, **characterized in that** the second step is triggered only when the first light detected and tracked from images from the front-end camera is on the point of leaving the field of view of the front-end camera.

3. Detection method according to Claim 2, **characterized in that** the second step is triggered only when the first light detected and tracked from images from the front-end camera is also in a red state.

4. System for implementing the method according to any one of Claims 1 to 3, comprising:
- a first front-end camera embedded on a motor vehicle;
- a first module for processing images captured by said first front-end camera, capable of detecting the presence and the state from among the three red/orange/green states of a traffic light, and of estimating the distance from the motor vehicle to this light;
- a peripheral vision system comprising a plurality of vision cameras embedded on said vehicle and a display screen capable of recreating a peripheral image of the environment of the motor vehicle from the images captured by said plurality of cameras; and
- a second module for processing the images captured by at least one of the vision cameras from among said plurality of vision cameras, the second processing module being able to detect the presence and the state from among the three red/orange/green states of the same light as that detected by the first processing module, and of estimating the distance from the motor vehicle to this same light.

5. System according to Claim 4, **characterized in that** the front-end camera is a camera with a horizontal aperture of the order of 40° to 50°.

6. System according to either one of Claims 4 and 5, **characterized in that** the front-end camera is positioned substantially centred horizontally at the windshield level inside the vehicle interior.

7. System according to any one of Claims 4 to 6, **characterized in that** said at least one of the vision cameras is a wide angle camera situated at the front of the vehicle or on one of the sides of the vehicle.

8. System according to Claim 7, **characterized in that** the wide angle camera is in the front bumper of the vehicle.

9. System according to Claim 7, **characterized in that** the wide angle camera is on an outside rear view mirror of the vehicle.

10. Computer program, comprising program code means for implementing the method of any one of Claims 1 to 3, when said program runs on a computer.

11. Computer-readable medium comprising instructions which, when they are executed by a computer, cause the latter to implement the method according to any one of Claims 1 to 3.
